# EUROPEAN PATENT APPLICATION

(11) **EP 4 765 368 A1**
(43) Date of publication of application: **24.06.2026**
(21) Application number: 25790551.3
(22) Date of filing: 21.03.2025
(51) Int. Cl.: H01M 50/124, H01M 50/126, H01M 50/133, H01M 50/105, C09J 7/40, C09D 183/04, C08L 23/00

(54) **POUCH FILM LAMINATE, POUCH-TYPE BATTERY CASE, AND POUCH-TYPE SECONDARY BATTERY**

(30) Priority: 18.04.2024 KR 20240052218
(71) Applicant: LG Energy Solution, Ltd., Seoul 07335 (KR)
(72) Inventor: SONG, Dae Woong, Daejeon 34122 (KR); HWANG, Soo Ji, Daejeon 34122 (KR); KIM, Gi Woung, Daejeon 34122 (KR); SHIN, Ji Hyun, Daejeon 34122 (KR); LEE, Wan Soo, Daejeon 34122 (KR)
(74) Representative: Plasseraud IP
(86) International application number: PCT/KR2025/003627
(87) International publication number: WO 2025/220892

(57) **Abstract**

The present invention relates to a pouch film laminate including a base material layer, a gas barrier layer, and a sealant layer which are sequentially laminated, wherein the pouch film laminate includes a silicone-based release coating layer coated on the sealant layer, the silicone-based release coating layer has a thickness of 1 µm or less, and the silicone-based release coating layer includes a silicone-based release agent, wherein the silicone-based release agent is a cross-linked silicone-based polymer having a weight-average molecular weight of less than 1,000,000 g/mol.

## Description

### TECHNICAL FIELD

### Cross-reference to Related Applications

This application claims priority from Korean Patent Application No. 10-2024-0052218, filed on April 18, 2024, the disclosure of which is incorporated by reference herein.

### Technical Field

The present invention relates to a pouch film laminate, a pouch type battery case, and a pouch type secondary battery.

### BACKGROUND ART

Secondary batteries have been used not only in small products such as digital cameras, P-DVDs, MP3Ps, mobile phones, PDAs, portable game devices, power tools, and E-bikes, but also in large products requiring high output, such as electric vehicles and hybrid vehicles, and a power storage device and a power storage device for backup which store surplus generated power or renewable energy.

Typically, a secondary battery is prepared by a method in which electrode active material slurries are applied onto a positive electrode collector and a negative electrode collector to prepare a positive electrode and a negative electrode, respectively, the positive electrode and the negative electrode are stacked on both sides of a separator to form an electrode assembly having a predetermined shape, the electrode assembly is then accommodated in a battery case, and the battery case is sealed after injecting an electrolyte.

The secondary batteries are classified into a pouch type, a can type, and the like, according to a material of a case for accommodating the electrode assembly. The pouch type accommodates the electrode assembly in a pouch formed of a flexible polymer material. In addition, the can type accommodates the electrode assembly in a case formed of a material such as metal or plastic.

The pouch type battery case is prepared by press working of a flexible pouch film laminate to form a cup portion. Then, once the cup portion is formed, a secondary battery is prepared by accommodating the electrode assembly in an accommodation space of the cup portion and sealing a sealing portion.

Drawing in the press working is performed by inserting a pouch film into press equipment and applying pressure to the pouch film laminate with a punch to stretch the pouch film laminate. The pouch film laminate is generally composed of a plurality of layers in which a polymer film, such as polyethylene terephthalate, is laminated on one surface of a gas barrier layer formed of metal and a sealant layer is laminated on the other surface thereof.

Recently, demand for a battery case that may accommodate more electrode assemblies is increasing as demand for high-capacity batteries, such as batteries for electric vehicles and energy storage system (ESS) batteries, increases. Accordingly, a cup portion forming depth of the pouch type battery case is increased, or a 2-cup forming method is being attempted in which a cup portion is formed in each of an upper case and a lower case to increase a volume of the cup portion.

When preparing a conventional pouch film laminate, a lubricant was included in an innermost sealant layer of the pouch film or a lubricant was applied to a surface of the sealant layer to prevent adhesion between the pouch films and facilitate post-processing. However, this method had a problem in that the lubricant contaminated a forming die during forming of a pouch in a secondary battery preparation process because a lubricant component existed on the surface of the sealant layer.

Thus, there is a need to develop a pouch film laminate to increase processability by preventing the contamination of the forming die and improve productivity of the secondary battery by reducing cleaning frequency.

### DISCLOSURE OF THE INVENTION

### TECHNICAL PROBLEM

An aspect of the present invention provides a pouch film laminate, a pouch type battery case, and a pouch type secondary battery which reduce a friction coefficient while improving processability by preventing contamination of a forming die, and improve wrinkles and formability degradation which occur during forming of a cup portion.

### TECHNICAL SOLUTION

[1] The present invention provides a pouch film laminate including a base material layer, a gas barrier layer, and a sealant layer which are sequentially laminated, wherein the pouch film laminate includes a silicone-based release coating layer coated on the sealant layer, the silicone-based release coating layer has a thickness of 1 µm or less, and the silicone-based release coating layer includes a silicone-based release agent, wherein the silicone-based release agent is a cross-linked silicone-based polymer having a weight-average molecular weight of less than 1,000,000 g/mol.
[2] In the pouch film laminate of [1] above, the silicone-based polymer may be at least one selected from the group consisting of polydimethylsiloxane (PDMS), polysilane, polycarbosilane, and polysilazane.
[3] In the pouch film laminate of [1] or [2] above, the silicone-based release coating layer includes a polyolefin-based resin, and the silicone-based release coating layer may include the silicone-based release agent in an amount of 80 wt% or more based on a total weight of the silicone-based release coating layer.
[4] In the pouch film laminate of at least one of [1] to [3] above, an amount of a lubricant present on a surface of the sealant layer may be less than 1 mg/m².
[5] In the pouch film laminate of at least one of [1] to [4] above, the sealant layer may have a friction coefficient of 0.05 to 0.30.
[6] In the pouch film laminate of at least one of [1] to [5] above, the base material layer may include at least one of polyethylene terephthalate (PET) and nylon.
[7] In the pouch film laminate of at least one of [1] to [6] above, the base material layer may have a thickness of 5 µm to 70 µm.
[8] In the pouch film laminate of at least one of [1] to [7] above, the gas barrier layer may include at least one metal selected from the group consisting of aluminum (Al), copper (Cu), stainless steel (SUS), nickel (Ni), titanium (Ti), and INVAR.
[9] In the pouch film laminate of at least one of [1] to [8] above, the gas barrier layer may have a thickness of 20 µm to 100 µm.
[10] In the pouch film laminate of at least one of [1] to [9] above, the sealant layer may include at least one selected from polypropylene (PP), acid-modified polypropylene (PPa), and cast polypropylene (CPP).
[11] In the pouch film laminate of at least one of [1] to [10] above, the sealant layer may have a thickness of 30 µm to 130 µm.
[12] In the pouch film laminate of at least one of [1] to [11] above, the pouch film laminate may have a thickness of 120 µm to 300 µm.
[13] The present invention provides a pouch type battery case which is prepared by drawing the pouch film laminate of at least one of [1] to [12] above.
[14] The present invention provides a pouch type secondary battery including the pouch type battery case of [13] above.

### ADVANTAGEOUS EFFECTS

Since a pouch film laminate according to the present invention reduces a friction coefficient by forming a silicone-based release coating layer on a sealant layer and does not include a lubricant, it improves processability by reducing a lubricant cleaning cycle of a forming die and improves formability of the pouch film laminate by preventing wrinkles that occur during forming of a cup portion.

### BRIEF DESCRIPTION OF THE DRAWINGS

The accompanying drawings illustrate preferred embodiments of the present disclosure, and together with the detailed description, serve to provide an explanation of the principle of the present disclosure, but not intended to limit the scope of the present disclosure thereto. On the other hand, the shape, size, scale or proportion of elements in the drawings as stated herein may be exaggerated for clarity.
FIG. 1 is a cross-sectional view of a pouch film laminate according to the present invention.
FIG. 2 is an exploded assembly view of a secondary battery according to the present invention.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

### <Pouch Film Laminate>

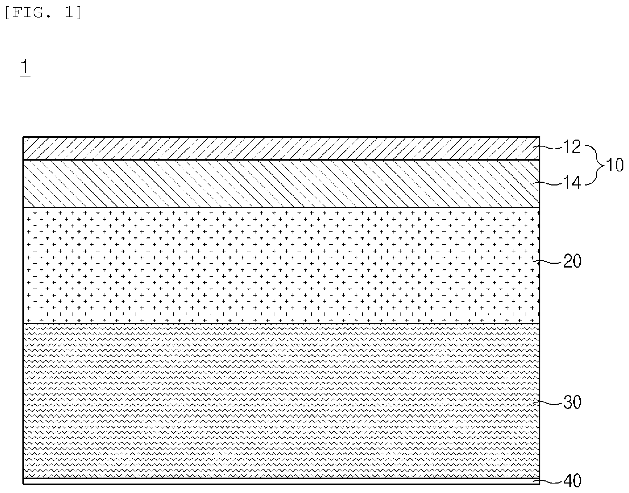

First, a pouch film laminate 1 according to the present invention will be described. The pouch film laminate 1 according to the present invention is illustrated in FIG. 1.

Referring to FIG. 1, the pouch film laminate 1 according to the present invention includes a base material layer 10, a gas barrier layer 20, and a sealant layer 30 which are sequentially laminated, and includes a silicone-based release coating layer 40 on the sealant layer 30.

When preparing a conventional pouch film laminate, in order to prevent adhesion between the pouch film laminates and facilitate post-processing, a method of including a lubricant in an innermost sealant layer of a pouch film, or applying a lubricant to a surface of the sealant layer was used to ensure the presence of the lubricant on the surface of the sealant layer. However, since a forming die was contaminated by the lubricant on the surface of the sealant layer, there was a problem in that processability was reduced because the forming die needed to be cleaned frequently.

Thus, in a case in which the surface of the sealant layer is coated with a separate silicone-based release coating layer, a pouch film laminate having better processability and formability than a case where the lubricant is included or applied may be prepared.

Hereinafter, each configuration of the pouch film laminate according to the present invention will be described in more detail with reference to FIG. 1.

### (1) Base Material Layer

The base material layer 10 is disposed as an outermost layer of a battery case to protect an electrode assembly from external impact and electrically insulate it, wherein the base material layer 10 may include at least one of polyethylene terephthalate (PET) and nylon.

According to an embodiment, the base material layer 10 may have a laminated structure of a polyethylene terephthalate (PET) film 12 and a Nylon film 14. In this case, it is desirable that the Nylon film 14 is disposed toward the gas barrier layer 20, i.e., on an inner side, and the polyethylene terephthalate film 12 is disposed toward a surface of the battery case.

Since polyethylene terephthalate (PET) has excellent durability and electrical insulation properties, the durability and insulation properties are excellent when the PET film is disposed toward the surface. However, with respect to the PET film, since adhesion to an aluminum alloy thin film constituting the gas barrier layer 20 is weak and a stretching behavior is also different, when the PET film is disposed toward the gas barrier layer, delamination between the base material layer and the gas barrier layer may occur during a forming process and a problem may occur in which the formability is reduced due to non-uniform stretching of the gas barrier layer. In contrast, since the Nylon film has a similar stretching behavior to the aluminum alloy thin film constituting the gas barrier layer 20, an effect of improving the formability may be obtained when the Nylon film is disposed between the polyethylene terephthalate and the gas barrier layer.

The base material layer 10 may have a thickness of 5 µm to 70 µm, particularly 7 µm to 65 µm, and more particularly 10 µm to 60 µm. In a case in which the above range is satisfied, formability and stiffness after forming may be excellent.

Also, in a case in which the base material layer 10 has the laminated structure of the polyethylene terephthalate (PET) film 12 and the Nylon film 14, the polyethylene terephthalate film may have a thickness of 5 µm to 30 µm, particularly 7 µm to 30 µm, and more particularly 10 µm to 27 µm, and the Nylon film may have a thickness of 10 µm to 60 µm, particularly 10 µm to 55 µm, and more particularly 15 µm to 50 µm. When the thicknesses of the polyethylene terephthalate film and the Nylon film satisfy the above ranges, the formability and stiffness after forming may be excellent.

### (2) Gas Barrier Layer

The gas barrier layer 20 is laminated between the base material layer 10 and the sealant layer 30 to secure mechanical strength of a pouch, block incoming and outgoing of gas or moisture from the outside of the secondary battery, and prevent leakage of an electrolyte from the inside of the pouch type battery case.

The gas barrier layer 20 may be formed of metal. For example, the gas barrier layer may be a metal thin film including at least one metal selected from the group consisting of aluminum (Al), copper (Cu), stainless steel (SUS), nickel (Ni), titanium (Ti), and INVAR, but is not limited thereto.

According to an embodiment of the present invention, the gas barrier layer 20 may be formed of an aluminum alloy thin film. In a case in which the gas barrier layer 20 is formed by using the aluminum alloy thin film, the gas barrier layer 20 is light-weighted while securing more than a predetermined level of mechanical strength, may compensate for electrochemical properties by the electrode assembly and the electrolyte, and may secure a heat dissipation property. An element other than aluminum (Al) may be included in the aluminum alloy thin film. For example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

In another example, the gas barrier layer 20 may be formed of a stainless steel thin film. Specifically, the gas barrier layer 20 may be prepared by forming and/or processing the stainless steel thin film. Since the gas barrier layer 20 formed of stainless steel has relatively low thermal conductivity, it is effective in preventing or delaying heat diffusion to other cells during thermal runaway, and, since it has relatively high toughness, it may suppress generation of cracks in the pouch during use of a pouch type battery. An element other than iron (Fe), for example, at least one selected from the group consisting of copper (Cu), chromium (Cr), manganese (Mn), nickel (Ni), magnesium (Mg), silicon (Si), and zinc (Zn) may be included in the stainless steel.

The gas barrier layer 20 may have a thickness of 20 µm to 100 µm, preferably 30 µm to 90 µm, and more preferably 40 µm to 85 µm. In a case in which the above range is satisfied, it is desirable in that it may properly block the incoming and outgoing of the gas or moisture from the outside of the secondary battery and may properly prevent the leakage of the electrolyte from the inside of the pouch type battery case. Also, formability during forming of a cup portion and gas barrier performance may be improved.

### (3) Sealant Layer

The sealant layer 30 is for completely sealing the inside of the pouch type battery case by being thermally bonded to each other at a sealing portion when the pouch type battery case accommodating the electrode assembly inside is sealed. For this purpose, the sealant layer 30 may be formed of a material having excellent thermal bonding strength.

The sealant layer 30 may be formed of a material having insulation properties, corrosion resistance, and sealing properties. Specifically, since the sealant layer 30 is in direct contact with the electrode assembly and/or the electrolyte inside the pouch type battery case, it may be formed of a material having insulation properties and corrosion resistance. Also, since the sealant layer 30 completely seals the inside of the pouch type battery case to block material movement between the inside/the outside, it may be formed of a material having high sealing properties (e.g., excellent thermal bonding strength). To ensure such insulation properties, corrosion resistance, and sealing properties, the sealant layer 30 may be formed of a polymer material.

The sealant layer 30 may include at least one material selected from the group consisting of polyethylene, polypropylene, polycarbonate, polyethylene terephthalate, polyvinyl chloride, acrylic polymer, polyacrylonitrile, polyimide, polyamide, cellulose, Nylon, polyester, polyparaphenylene benzobisoxazole, polyarylate, and Teflon, and may specifically include a polyolefin-based resin such as polypropylene (PP) and/or polyethylene (PE). In this case, the polypropylene may be composed of cast polypropylene (CPP), acid modified polypropylene (PPa), a polypropylene-ethylene copolymer, and/or a polypropylene-butylene-ethylene terpolymer. More specifically, the sealant layer 30 may include at least one selected from polypropylene (PP), acid-modified polypropylene (PPa), and cast polypropylene (CPP), and even more specifically, from a gas barrier layer side, the sealant layer 30 may be formed of any one of a laminated structure of acid-modified polypropylene and polypropylene, a laminated structure of acid-modified polypropylene and cast polypropylene, or a cast polypropylene single layer.

An amount of the lubricant present on the surface of the sealant layer 30 may be less than 1 mg/m², particularly less than 0.8 mg/m², and more particularly less than 0.5 mg/m². The present invention may maintain an appropriate frictional force because a separate silicone-based release coating layer exists even if the lubricant of the above range is included, and since the contamination of the forming die is reduced due to a small amount of the lubricant, a lubricant cleaning cycle may be extended to improve the processability.

The sealant layer 30 may have a friction coefficient of 0.05 to 0.30, particularly 0.1 to 0.2, and more particularly 0.12 to 0.18. In a case in which the above range is satisfied, since slip properties of the sealant layer are appropriately improved, occurrence of defects, such as cracks, is reduced even if physical deformation occurs in the sealant layer during forming and a whitening phenomenon may be reduced.

The sealant layer 30 may have a thickness of 30 µm to 130 µm, particularly 40 µm to 120 µm, and more particularly 60 µm to 100 µm. In a case in which the thickness of the sealant layer satisfies the above range, there is an effect of securing formability of the pouch film laminate while securing sealing strength of the sealing portion.

The sealant layer 30 according to the present invention may have a composite layer structure which is formed by layering two or more materials, respectively. For example, the sealant layer 30 may have a multilayer structure. An adhesive layer and/or a skin layer may be disposed between the respective layers of the sealant layer 30 having the composite layer structure. Since the adhesive layer and/or skin layer have thermal adhesiveness, the adhesive layer and/or skin layer may play a role in helping adhesion between the respective layers of the sealant layer 30. For example, the adhesive layer and/or skin layer may include a polypropylene-based resin, but are not limited thereto. Also, the adhesive layer and/or skin layer may be disposed between the sealant layer 30 and the gas barrier layer 20.

### (4) Silicone-based Release Coating Layer

The silicone-based release coating layer 40 according to an embodiment of the present invention is coated on the sealant layer 30, wherein a thickness of the silicone-based release coating layer 40 is characterized by being 1 µm or less, and may specifically be 0.5 µm or less, more specifically, 0.1 µm or less.

In a case in which the thickness of the silicone-based release coating layer satisfies the above range, sealing strength may be secured due to the small thickness. However, in a case in which the thickness of the silicone-based release coating layer is greater than 1 µm, since a silicone-based polymer and polypropylene do not mix well at an interface during sealing of the pouch, a problem occurs in which the sealing strength is reduced.

The silicone-based release coating layer 40 includes a silicone-based release agent, and the silicone-based release agent is characterized by being a cross-linked silicone-based polymer having a weight-average molecular weight of less than 1,000,000 g/mol.

The silicone-based polymer is not particularly limited as long as it may provide slip properties, but may specifically be at least one selected from the group consisting of polydimethylsiloxane (PDMS), polysilane, polycarbosilane, and polysilazane, and may more specifically be polydimethylsiloxane (PDMS). In a case in which the silicone-based polymer is included in the silicone-based release coating layer, the processability may be excellent because the cleaning cycle is extended due to the reduction in the contamination of the forming die unlike when the lubricant is used, the processability may be improved because a failure rate due to the contamination is also reduced, wrinkles may not occur during the forming of the cup portion, and a maximum forming depth may be excellent.

The silicone-based polymer is characterized by having a weight-average molecular weight of less than 1,000,000 g/mol, and the weight-average molecular weight may specifically be less than 900,000 g/mol, and may more specifically be less than 600,000 g/mol. In a case in which the weight-average molecular weight of the silicone-based polymer is 1,000,000 g/mol or more, there is a problem in that coatability is reduced due to high viscosity.

A weight-average molecular weight may denote a standard polystyrene-equivalent value measured by gel permeation chromatography (GPC), and, unless otherwise specified, a molecular weight may denote the weight-average molecular weight. For example, the weight-average molecular weight in the present invention is measured using 1200 series by Agilent Technologies, a PL mixed B column by Agilent Technologies may be used in this case, and tetrahydrofuran (THF) may be used as a solvent.

The silicone-based release agent is characterized by being a cross-linked silicone-based polymer. In a case in which the silicone-based polymer is not cross-linked, since physical properties may be weakened, silicone may be transferred to the forming die to contaminate the forming die.

The silicone-based release coating layer may further include a polyolefin-based resin, such as polyethylene (PE) and polypropylene (PP), in addition to the silicone-based polymer. The polyolefin-based resin may be included to advantageously maintain adhesion between the silicone-based release coating layer and the sealant layer of the pouch film laminate, and may secure heat resistance because its melting point is higher than that of the silicone-based polymer.

The silicone-based release coating layer 40 may include the polydimethylsiloxane (PDMS) in an amount of 80 wt% or more, particularly 85 wt% or more, and more particularly 90 wt% or more based on a total weight of the silicone-based release coating layer. In a case in which the weight ratio of the polydimethylsiloxane (PDMS) satisfies the above range, since an appropriate frictional force is generated due to the slip properties of the polydimethylsiloxane (PDMS) when mixed with a crosslinking agent, a blocking phenomenon, in which the layers adhere to each other during the preparation of the pouch film laminate, may be prevented.

The silicone-based release coating layer 40 may be formed by coating on the sealant layer 30. The coating method is not particularly limited, and a known coating method, such as slot die, gravure coating, spin coating, spray coating, roll coating, curtain coating, extrusion, casting, screen printing, inkjet printing, chemical vapor deposition (CVD), or physical vapor deposition (PVD), may be used.

The pouch film laminate according to the present invention as described above may be prepared by a method of preparing a pouch film laminate which is known in the art. For example, the pouch film laminate according to the present invention may be prepared by a method of attaching the base material layer 10 to an upper surface of the gas barrier layer 20 using an adhesive, forming the sealant layer 30 on a lower surface of the gas barrier layer 20 by co-extrusion or an adhesive layer, and coating the silicone-based release coating layer 40 on a lower surface of the sealant layer 30 through a heat treatment, and may be prepared by a method such as dry lamination and sandwich lamination. However, the method of preparing a pouch film laminate is not limited thereto.

The pouch film laminate according to the present invention may have a thickness of 120 µm to 300 µm, particularly 130 µm to 280 µm, and more particularly 140 µm to 250 µm. When the thickness of the pouch film laminate satisfies the above range, a forming depth may be increased while minimizing a reduction of sealing durability or a decrease in battery accommodation space due to an increase in the thickness of the pouch film laminate.

### <Pouch Type Secondary Battery>

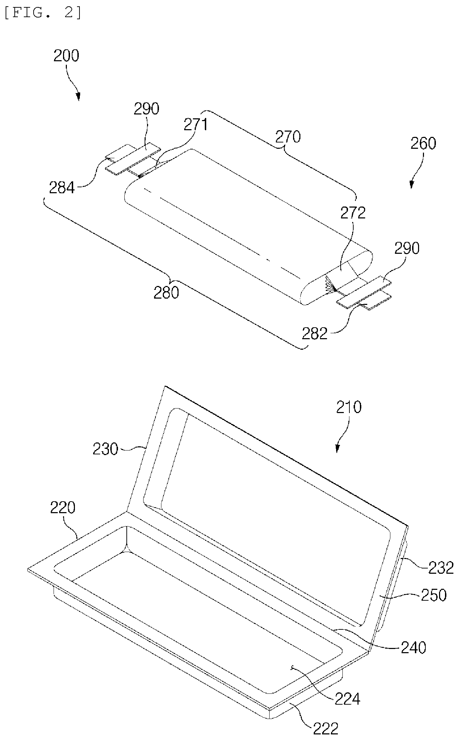

Next, a pouch type secondary battery 200 according to the present invention will be described. An exploded assembly view of the pouch type secondary battery 200 according to the present invention is illustrated in FIG. 2.

As illustrated in FIG. 2, the pouch type secondary battery 200 according to the present invention may include a pouch type battery case 210 prepared by forming the above-described pouch film laminate, and an electrode assembly 260 accommodated in the pouch type battery case 210. Specifically, the pouch type secondary battery 200 according to the present invention may include the pouch type battery case 210, the electrode assembly 260, an electrode lead 280, an insulating portion 290, and an electrolyte (not shown).

Hereinafter, each configuration of the pouch type secondary battery according to the present invention will be described in more detail with reference to FIG. 2.

### (1) Pouch Type Battery Case

The pouch type battery case 210 may be prepared by forming the above-described pouch film laminate according to the present invention. The pouch type battery case 210 may accommodate the electrode assembly 260 inside. Since detailed configuration and physical properties of the pouch film laminate are the same as described above, a detailed description is omitted.

The pouch film laminate may be drawn and stretched by a punch or the like to prepare the pouch type battery case 210. As a result, the pouch type battery case 210 may include a cup portion 222 and an accommodation portion 224. The accommodation portion 224 is a place to accommodate the electrode assembly, wherein it may mean an accommodation space which is formed in a pocket shape inside the cup portion 222 as the cup portion 222 is formed.

According to an embodiment of the present invention, the pouch type battery case 210 may include a first case 220 and a second case 230 as illustrated in FIG. 3. The first case 220 includes the accommodation portion 224 capable of accommodating the electrode assembly 260, and the second case 230 may cover the accommodation portion 224 from the top so that the electrode assembly 260 is not separated to the outside of the battery case 210. The first case 220 and the second case 230 may be prepared by connecting one side thereof to each other as illustrated in FIG. 3, but the present invention is not limited thereto and the first case and the second case may be prepared in various ways, for example, the first case and the second case are separated from each other and prepared separately.

According to another embodiment of the present invention, in a case in which the cup portion is formed on the pouch film laminate, the two symmetrical cup portions 222 and 232 may be drawn adjacent to each other on one pouch film laminate. In this case, as illustrated in FIG. 3, the cup portions 222 and 232 may be formed in the first case 220 and the second case 230, respectively. After the electrode assembly 260 is accommodated in the accommodation portion 224 provided in the cup portion 222 of the first case 220, a bridge portion 240 formed between the two cup portions 222 and 232 may be folded so that the two cup portions 222 and 232 face each other. In this case, the cup portion 232 of the second case 230 may accommodate the electrode assembly 260 from above. Thus, since the two cup portions 222 and 232 accommodate the one electrode assembly 260, the electrode assembly 260 having a thickness greater than that when the cup portion 222 is one may be accommodated. Also, since one edge of the secondary battery 200 is formed by folding the pouch type battery case 210, the number of edges to be sealed may be reduced when a sealing process is performed later. Accordingly, a process speed of the pouch type secondary battery 200 may be improved, and the number of sealing processes may be reduced.

The pouch type battery case 210 may be sealed in a state in which it accommodates the electrode assembly 260 so that a portion of the electrode lead 280 to be described later, that is, a terminal portion, is exposed. Specifically, when the electrode lead 280 is connected to an electrode tab 270 of the electrode assembly 260 and the insulating portion 290 is formed in the portion of the electrode lead 280, the electrode assembly 260 is accommodated in the accommodation portion 224 provided in the cup portion 222 of the first case 220, and the second case 230 may cover the accommodation portion 224 from the top. Subsequently, an electrolyte is injected in the accommodation portion 224 and a sealing portion 250 formed on edges of the first case 220 and the second case 230 may be sealed.

The sealing portion 250 may act to seal the accommodation portion 224. Specifically, the sealing portion 250 may seal the accommodation portion 224 while being formed along an edge of the accommodation portion 224. Temperature at which the sealing portion 250 is sealed may be in a range of 180°C to 250°C, particularly 200°C to 250°C, and more particularly 210°C to 240°C. In a case in which the sealing temperature satisfies the above numerical range, the pouch type battery case 210 may secure sufficient sealing strength by thermal bonding.

### (2) Electrode Assembly

The electrode assembly 260 may be inserted into the pouch type battery case 210 and may be sealed by the pouch type battery case 210 after the injection of the electrolyte.

The electrode assembly 260 may be formed by sequentially stacking a positive electrode, a separator, and a negative electrode. Specifically, the electrode assembly 260 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 260 may be prepared in a predetermined shape by stacking the positive electrode and the negative electrode on both sides of the separator. Types of the electrode assembly 260 may include a stacked type, a jelly-roll-type, and a stack and folding type, but are not limited thereto.

The electrode assembly 260 may include the electrode tab 270.

The electrode tab 270 is connected to each of the positive electrode and the negative electrode of the electrode assembly 260 and protrudes from the electrode assembly 260 to the outside so that it may be a path through which electrons may move between the inside and the outside of the electrode assembly 260. The electrode current collector included in the electrode assembly 260 may be composed of a portion to which the electrode active material is applied and an end portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 2, the electrode tabs 270 may protrude in different directions of the electrode assembly 260, respectively, but are not limited thereto and may be formed to protrude in various directions, for example, the electrode tabs protrude side by side from one side of the electrode assembly in the same direction.

### (3) Electrode Lead

The electrode lead 280 may supply electricity to the outside of the secondary battery 200. The electrode lead 280 may be connected to the electrode tab 270 of the electrode assembly 260 by spot welding or the like.

The electrode lead 280 is connected to the electrode assembly 260 and may protrude to the outside of the pouch type battery case 210 via the sealing portion 250. Specifically, one end of the electrode lead 280 is connected to the electrode assembly 260, especially the electrode tab 270, and the other end of the electrode lead 280 may protrude to the outside of the pouch type battery case 210.

The electrode lead 280 may include a positive electrode lead 282, which has one end connected to a positive electrode tab 272 and extends in a protruding direction of the positive electrode tab 272, and a negative electrode lead 284 which has one end connected to a negative electrode tab 274 and extends in a protruding direction of the negative electrode tab 274. The other ends of both of the positive electrode lead 282 and the negative electrode lead 284 may protrude to the outside of the battery case 210. Accordingly, the electricity generated inside the electrode assembly 260 may be supplied to the outside. Also, since the positive electrode tab 272 and the negative electrode tab 274 are formed to respectively protrude in various directions, the positive electrode lead 282 and the negative electrode lead 284 may also respectively extend in various directions. Materials of the positive electrode lead 282 and the negative electrode lead 284 may be different from each other. That is, the positive electrode lead 282 may be formed of an aluminum (Al) material that is the same as the positive electrode collector, and the negative electrode lead 284 may be formed of a copper (Cu) material or nickel (Ni)-coated copper material that is the same as the negative electrode collector. Since a portion of the electrode lead 280 protruding to the outside of the battery case 210 becomes a terminal portion, it may be electrically connected to an external terminal.

### (4) Insulating Portion

The insulating portion 290 prevents flow of the electricity generated from the electrode assembly 260 to the battery case 210 through the electrode lead 280, and may maintain sealing of the battery case 210. For this purpose, the insulating portion 290 may be formed of an insulator having non-conductivity which does not conduct electricity well. In general, as the insulating portion 290, an insulating tape or film, which is easy to be attached to the electrode lead 280 and is relatively thin, is widely used, but the present invention is not limited thereto and any member capable of insulating the electrode lead 280 may be used.

The insulating portion 290 may be disposed to surround an outer circumferential surface of the electrode lead 280. Specifically, at least a portion of the electrode lead 280 may be surrounded by the insulating portion 290. In this case, the insulating portion 290 may be disposed between the electrode lead 280 and the pouch type battery case 210. The insulating portion 290 may be limitedly located at the sealing portion 250 to which the first case 220 and the second case 230 of the pouch type battery case 210 are thermally fused, and may adhere the electrode lead 280 to the battery case 210.

### (5) Electrolyte

The pouch type secondary battery 200 according to the present invention may further include an electrolyte (not shown) that is injected into the pouch type battery case 210. The electrolyte is for moving lithium ions that are generated by an electrochemical reaction of the electrode during charge/discharge of the secondary battery 200, wherein it may include a non-aqueous organic electrolyte solution, as a mixture of a lithium salt and organic solvents, or a polymer using a polymer electrolyte. Furthermore, the electrolyte may include a sulfide-based, oxide-based, or polymer-based solid electrolyte, and the solid electrolyte may have flexibility to be easily deformed by an external force.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Examples and Comparative Examples

### Example 1: Preparation of Pouch Film Laminate

A sealant layer including sequentially laminated acid-modified polypropylene (PPa) and polypropylene (PP) having a total thickness of 80 µm was prepared, and a silicone-based release coating layer formed of only cross-linked polydimethylsiloxane (PDMS) having a weight-average molecular weight of 590,000 g/mol was coated on the sealant layer to a thickness of 0.1 µm.

Thereafter, a second adhesive film, a 25 µm thick nylon film, a first adhesive film, and a 12 µm thick polyethylene terephthalate (PET) film were sequentially laminated on one surface of a 60 µm thick aluminum alloy thin film, and the sealant layer coated with the silicone-based release coating layer was sequentially laminated on the other surface of the aluminum alloy thin film.

As a result, a pouch film laminate having a structure, in which the above-prepared silicone-based release coating layer/sealant layer (polypropylene/acid-modified polypropylene)/aluminum alloy thin film/second adhesive film/nylon film/first adhesive film/polyethylene terephthalate film were sequentially laminated, was prepared.

### Example 2: Preparation of Pouch Film Laminate

A pouch film laminate was prepared in the same manner as in Example 1 except that a silicone-based release coating layer was coated to a thickness of 0.5 µm.

### Example 3: Preparation of Pouch Film Laminate

A pouch film laminate was prepared in the same manner as in Example 1 except that a silicone-based release coating layer was coated to a thickness of 1.0 µm.

### Example 4: Preparation of Pouch Film Laminate

A pouch film laminate was prepared in the same manner as in Example 1 except that cross-linked polydimethylsiloxane (PDMS) having a weight-average molecular weight of 800,000 g/mol was used.

### Example 5: Preparation of Pouch Film Laminate

A pouch film laminate was prepared in the same manner as in Example 1 except that a silicone-based release coating layer was prepared by mixing 80 wt% of polydimethylsiloxane (PDMS) and 20 wt% of polypropylene (PP) based on a total weight of the silicone-based release coating layer.

### Example 6: Preparation of Pouch Film Laminate

A pouch film laminate was prepared in the same manner as in Example 1 except that a silicone-based release coating layer was prepared by mixing 70 wt% of polydimethylsiloxane (PDMS) and 30 wt% of polypropylene (PP) based on a total weight of the silicone-based release coating layer.

### Comparative Example 1: Preparation of Pouch Film Laminate

A pouch film laminate was prepared in the same manner as in Example 1 except that a silicone-based release coating layer was coated to a thickness of 2.0 µm.

### Comparative Example 2: Preparation of Pouch Film Laminate

A pouch film laminate was prepared in the same manner as in Example 1 except that a silicone-based release coating layer was not formed separately and a lubricant (Erucamide) was applied onto a surface of the sealant layer such that an amount of the lubricant was 4 mg/m².

### Comparative Example 3: Preparation of Pouch Film Laminate

A pouch film laminate was prepared in the same manner as in Example 1 except that a silicone-based release coating layer was not formed separately and a lubricant (Erucamide) was applied onto a surface of the sealant layer such that an amount of the lubricant was 26 mg/m².

### Comparative Example 4: Preparation of Pouch Film Laminate

A pouch film laminate was prepared in the same manner as in Example 1 except that cross-linked polydimethylsiloxane (PDMS) having a weight-average molecular weight of 1,100,000 g/mol was used.

However, in this case, since viscosity of the silicone-based release agent was excessively increased due to the high weight-average molecular weight, a silicone-based release coating layer could not be formed.

### Experimental Example 1: Friction Coefficient Measurement

A friction coefficient of each of the pouch film laminates prepared according to Examples 1 to 6 and Comparative Examples 1 to 3 was measured.

As a method of measuring the friction coefficient, the measurement was made by bring a sled metal having a size of 130 mm (machine direction (MD)) × 65 mm (transverse direction (TD)) and a weight of 200 g into contact with the silicone-based release coating layer of the pouch film laminate having a size of 300 mm (MD) × 200 mm (TD).

Specifically, the sled metal was moved 100 mm over the sealant layer at a speed of 100 mm/min, and the friction coefficient was measured by taking kinetic friction coefficients measured 5 times in a range of 20 mm to 80 mm as an average value.

Measurement results are presented in [Table 1] below.

### Experimental Example 2: Evaluation of Formability of the Pouch Film Laminate

### (1) Forming Depth Evaluation

Formability of each of the pouch film laminates prepared according to Examples 1 to 6 and Comparative Examples 1 to 3 was evaluated.

As a method of evaluating the formability of the pouch film laminate, after each of the pouch film laminates was cut to the same size of 300 mm (MD) × 400 mm (TD), a maximum forming depth at which no cracks occurred was recorded while changing a forming depth in a battery case forming device having two forming parts with a size of 61 mm (MD) × 159 mm (TD). Herein, corners and edges of a punch and the forming part of the battery case forming device were filleted, the corner of the punch had a curvature of 2 mm, the edge thereof had a curvature of 0.5 mm, the corner of the forming part had a curvature of 2.5 mm, and the edge thereof had a curvature of 1 mm. In addition, clearance of the punch and the forming part was 0.5 mm.

The measured forming depths are listed in [Table 1] below.

### (2) Evaluation of the Presence of Wrinkles

When forming the pouch film using an uncontaminated forming device during the forming depth evaluation, if wrinkles occurred in the cup portion of the pouch film laminate at the maximum forming depth, it was evaluated as O, and if no wrinkles occurred, it was evaluated as X.

The presence of wrinkles is listed in [Table 1] below.

### Experimental Example 3: Measurement of Lubricant Cleaning Cycle During Forming of the Pouch Film Laminate

When forming each of the pouch film laminates prepared according to Examples 1 to 6 and Comparative Examples 1 to 3, a lubricant cleaning cycle was measured.

Specifically, when continuously producing the pouch film laminate in which a cup portion having the maximum forming depth was formed, the lubricant cleaning cycle was measured based on the maximum number of strokes without the occurrence of wrinkles.

Measurement results are listed in [Table 1] below.

### Experimental Example 4: Measurement of Sealing Strength

Sealing strength of each of the pouch film laminates prepared according to Examples 1 to 6 and Comparative Examples 1 to 3 was measured.

As a method of measuring the sealing strength of the pouch film laminate, after the pouch film laminate was cut to a size of 266 mm in width and 200 mm in length and then folded in half to a size of 133 mm × 200 mm such that the silicone-based release coating layers were in contact with each other, pouch type battery cases having a sealing portion formed therein were prepared by sealing an end of a long side (200 mm) for 1.6 seconds, 3 seconds, or 5 seconds, respectively, under conditions of a seal bar area of 200 mm × 8 mm, 200°C, and 0.1 MPa, and sealing strength of the pouch type battery case was measured according to each sealing time.

Specifically, the sealing strength was calculated from a maximum value of tensile strength which was measured by cutting the sealing portion formed in the pouch type battery case at an interval of 15 mm and pulling it in a 180° direction at a speed of 5 mm/min at room temperature using a universal testing machine (UTM).

Based on the sealing strength calculated, a case where the measured sealing strength was 10 kgf or more was evaluated as O, and a case where the measured sealing strength was less than 10 kgf was evaluated as X.

Evaluation results are listed in [Table 1] below.

**[Table 1]**

| | Friction coefficient | Forming depth [mm] | The presence of wrinkles | Lubricant cleaning cycle [strokes] | Sealing strength |
|---|---|---|---|---|---|
| Example 1 | 0.2 | 8.0 | X | 5000 | O |
| Example 2 | 0.1 | 8.0 | X | 6000 | O |
| Example 3 | 0.13 | 8.0 | X | 8000 | O |
| Example 4 | 0.2 | 8.0 | X | 5000 | O |
| Example 5 | 0.25 | 7.5 | X | 5000 | O |
| Example 6 | 0.35 | 7.0 | X | 5000 | O |
| Comparative Example 1 | 0.10 | 8.0 | X | 10,000 | X |
| Comparative Example 2 | 0.4 | 6.0 | X | 5000 | O |
| Comparative Example 3 | Less than 0.05 | 8.0 | O | 500 | O |
| Comparative Example 4 | Formation of the silicone-based release coating layer was not possible | | | | |

Referring to [Table 1], it may be confirmed that Examples 1 to 6 had lower friction coefficient or better formability than Comparative Examples 1 to 3.

Also, with respect to Examples 1 to 6, it may be confirmed that lubricant cleaning cycles were longer than those of Comparative Examples 2 and 3 in which the lubricant was applied onto the surface of the sealant layer, and that no wrinkles occurred during the forming of the pouch film laminate.

### [Description of the Symbols]

1: Pouch Film Laminate
10: Base Material Layer
12: Polyethylene Terephthalate Film
14: Nylon Film
20: Gas Barrier Layer
30: Sealant Layer
40: Silicone-based Release Coating Layer
200: Pouch Type Secondary Battery
210: Pouch Type Case
220: First Case
222: Cup Portion
224: Accommodation Portion
230: Second Case
232: Cup Portion
240: Bridge Portion
250: Sealing Portion
260: Electrode Assembly
270: Electrode Tab
272: Positive Electrode Tab
274: Negative Electrode Tab
280: Electrode Lead
282: Positive Electrode Lead
284: Negative Electrode Lead
290: Insulating Portion

## Claims

1. A pouch film laminate comprising:
a base material layer, a gas barrier layer, and a sealant layer which are sequentially laminated,
wherein the pouch film laminate comprises a silicone-based release coating layer coated on the sealant layer,
the silicone-based release coating layer has a thickness of 1 µm or less, and
the silicone-based release coating layer comprises a silicone-based release agent,
wherein the silicone-based release agent is a cross-linked silicone-based polymer having a weight-average molecular weight of less than 1,000,000 g/mol.

2. The pouch film laminate of claim 1, wherein the silicone-based polymer is at least one selected from the group consisting of polydimethylsiloxane (PDMS), polysilane, polycarbosilane, and polysilazane.

3. The pouch film laminate of claim 1, wherein the silicone-based release coating layer comprises a polyolefin-based resin, and
the silicone-based release coating layer comprises the silicone-based release agent in an amount of 80 wt% or more based on a total weight of the silicone-based release coating layer.

4. The pouch film laminate of claim 1, wherein an amount of a lubricant present on a surface of the sealant layer is less than 1 mg/m².

5. The pouch film laminate of claim 1, wherein the sealant layer has a friction coefficient of 0.05 to 0.30.

6. The pouch film laminate of claim 1, wherein the base material layer comprises at least one of polyethylene terephthalate (PET) and nylon.

7. The pouch film laminate of claim 1, wherein the base material layer has a thickness of 5 µm to 70 µm.

8. The pouch film laminate of claim 1, wherein the gas barrier layer comprises at least one metal selected from the group consisting of aluminum (Al), copper (Cu), stainless steel (SUS), nickel (Ni), titanium (Ti), and INVAR.

9. The pouch film laminate of claim 1, wherein the gas barrier layer has a thickness of 20 µm to 100 µm.

10. The pouch film laminate of claim 1, wherein the sealant layer comprises at least one selected from polypropylene (PP), acid-modified polypropylene (PPa), and cast polypropylene (CPP).

11. The pouch film laminate of claim 1, wherein the sealant layer has a thickness of 30 µm to 130 µm.

12. The pouch film laminate of claim 1, wherein the pouch film laminate has a thickness of 120 µm to 300 µm.

13. A pouch type battery case prepared by drawing the pouch film laminate of claim 1.

14. A pouch type secondary battery comprising the battery case of claim 13.
